# EUROPÄISCHE PATENTSCHRIFT

(11) **EP 0 944 928 B1**
(45) Veröffentlichungstag und Bekanntmachung des Hinweises auf die Patenterteilung: **17.12.2003**
(21) Anmeldenummer: 98937401.2
(22) Anmeldetag: 28.05.1998
(51) Int. Cl.: H01M 2/38, H01M 10/42, H01M 10/04

(54) **FLÜSSIGELEKTROLYTBATTERIE MIT ELEKTROLYTUMWÄLZUNG**
LIQUID ELECTROLYTE BATTERY WITH ELECTROLYTE CIRCULATION
BATTERIE A ELECTROLYTE LIQUIDE EN CIRCULATION

(30) Priorität: 10.10.1997 DE 19744863
(43) Veröffentlichungstag der Anmeldung: 29.09.1999
(73) Patentinhaber: IQ Battery Research & Development GmbH, 09557 Flöha (DE)
(72) Erfinder: TSCHIRCH, Steffen, D-09405 Zschopau (DE)
(74) Vertreter: Goddar, Heinz J., Dr.
(86) Internationale Anmeldenummer: DE9801472
(87) Internationale Veröffentlichungsnummer: WO99019923

(56) Entgegenhaltungen:
- DE-A- 3 134 538
- DE-A- 3 314 174
- DE-C- 78 061
- DE-U- 9 115 163
- DE-U- 9 115 597
- DE-U- 29 718 004
- GB-A- 151 293
- GB-A- 2 004 409
- US-A- 4 963 444
- PATENT ABSTRACTS OF JAPAN vol. 006, no. 107 (E-113), 17. Juni 1982 -& JP 57 038571 A (JAPAN STORAGE BATTERY CO LTD), 3. März 1982
- DATABASE WPI Section EI, Week 8407 Derwent Publications Ltd., London, GB; Class X16, AN 84-041938 XP002084919 & SU 1 010 680 A (KVANT PRODN COMBINE) , 7. April 1983

## Beschreibung

Die Erfindung betrifft eine Flüssigelektrolytbatterie, die vorzugsweise in bewegten Fahrzeugen, wie z. B. in PKW, Booten oder Flugzeugen zum Einsatz kommt.

Das Bestreben insbesondere der Fahrzeugindustrie nach Leichtbauweise betrifft auch die Einsparung von Batteriegewicht. Gleichzeitig steigt jedoch die Anforderung nach höherer Batterieleistung, da neben der herkömmlichen Energie zum Starten des Fahrzeugs auch Energie für zusätzliche Aggregate wie elektrische Fensterheber, Stellmotore zum Verstellen der Sitze oder auch zum elektrischen Beheizen der Sitze benötigt wird. Ferner ist es wünschenswert, die Batterieleistung über die Lebensdauer der Batterie möglichst auf einem konstanten hohen Niveau zu halten.

Aus dem Stand der Technik sind verschiedene Maßnahmen bekannt, um die Leistung einer herkömmlichen Blei-Säure-Batterie zu erhöhen. Unter Leistung wird nachfolgend die Kapazität der Batterie sowie die Fähigkeit der Batterie zur Stromabgabe bzw. zur -aufnahme verstanden.

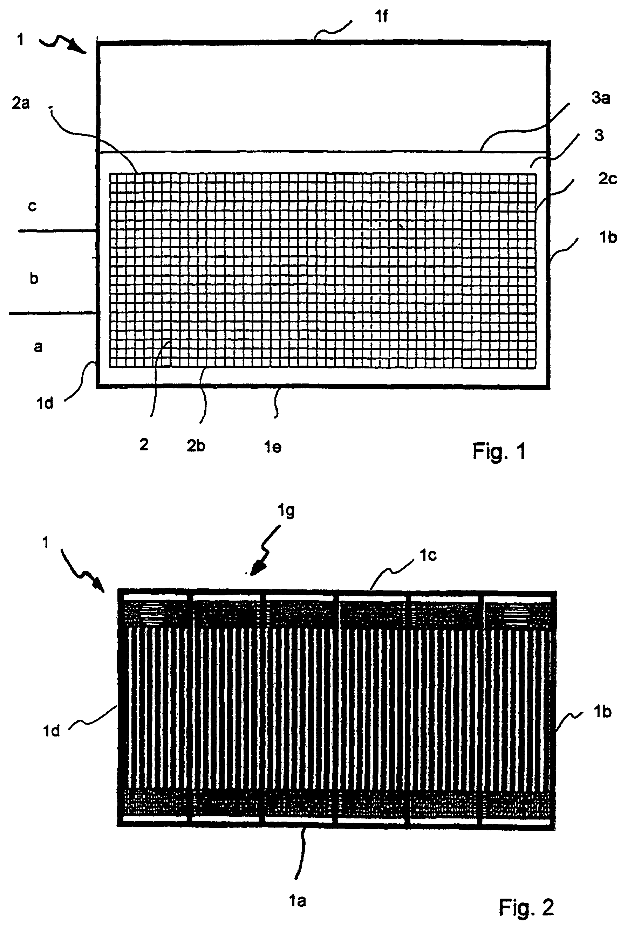

Ein besonderes Problem bei Blei-Säure-Batterien ist die möglichst vollständige Nutzung der Elektrodenfläche. Anhand der Fig. 1 bis 3 soll das aus dem Stand der Technik bekannte Problem erläutert werden. Fig. 1 zeigt eine Schnittdarstellung einer PKW-Batterie 1 längs ihrer Elektroden 2, die in dieser Ausführung eine Gitterform aufweisen. Mit Bezugszeichen 3a ist der Pegelstand der Batteriesäure 3 bezeichnet. Untersuchungen haben ergeben, daß sich die chemischen Eigenschaften der Batteriesäure in den mit a, b, c gekennzeichneten Bereichen erheblich voneinander unterscheiden.

So ist in dem Bereich a die Säurekonzentration zu hoch, was zu Korrosion und letztlich zur Zersetzung der Platten führt. Im Bereich c ist die Säurekonzentration zu niedrig, d. h. es fehlen die für eine Funktion der Batterie erforderlichen elektrolytischen Eigenschaften.

Lediglich im mittleren Bereich b weist die Säure das optimale stöchiometrische Verhältnis auf. Daher wird auf Grund der unzureichenden Säureeigenschaften in den Bereichen a und c die vorhandene Elektrodenfläche nicht optimal ausgenutzt. Es ist für den Fachmann klar, daß sich die Bereiche nicht wie dargestellt scharf abgrenzen lassen.

Um auch in den Bereichen a und c das stöchiometrische Verhältnis zu verbessern, ist aus dem Stand der Technik bekannt, die Batteriesäure, d. h. den Elektrolyten, umzuwälzen, um eine bessere Durchmischung zu erreichen. Damit wird auch gleichzeitig verhindert, daß sich Ablagerungen bilden, die die Funktion und die Lebensdauer der Batterie beeinträchtigen.

In dem Dokument DE U1 9114909 ist eine Akkumulatorenbatterie offenbart, bei der mittels Einleiten von Gas aus einer Druckgasquelle eine Elektrolytumwälzung erzwungen wird. Solche Einrichtungen eignen sich wegen ihres komplizierten Aufbaus nicht für Fahrzeugbatterien, zumal zusätzlich noch eine Druckgasquelle erforderlich ist.

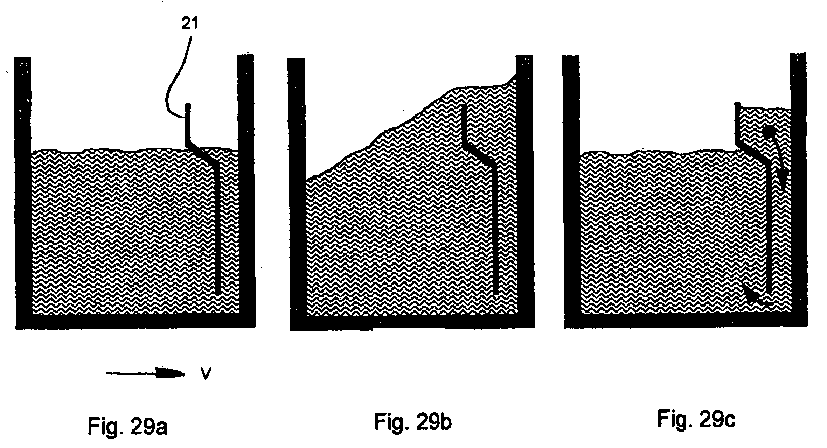

Aus dem Stand der Technik sind weiterhin Elektrolytdurchmischungsvorrichtungen bekannt, die als hydrostatische Pumpen bezeichnet werden. Die Fig. 29a, 29b und 29c zeigen die prinzipielle Wirkungsweise dieser Vorrichtung. Die Fig. 29a zeigt eine Schnittdarstellung eines mit Elektrolyt gefüllten Batteriekastens, der eine doppelt abgewinkelte Platte 21 aufweist, wobei ein Abschnitt des Winkels über die Oberfläche des Elektrolyten hinausragt. Die Elektrodenplatten sind wegen der besseren Anschauung nicht dargestellt. Wenn sich der in einem Fahrzeug eingebaute Batteriekasten mit einer gleichförmigen Geschwindigkeit v bewegt, d. h. das Fahrzeug weder bremst noch beschleunigt, ist die Oberfläche des Elektrolyten eben und horizontal. Die Fig. 29b zeigt, daß sich bei einem Bremsvorgang der Elektrolyt auf Grund der Massenträgheit in Fahrtrichtung zu einer Welle aufbaut, die über den oberen Abschnitt des Plattenrandes schwappt. Da nunmehr der Flüssigkeitsstand zwischen dem Winkel und der Gehäusewand höher ist, fließt gemäß Fig. 29c der Elektrolyt nach unten ab, bis sich beide Pegelstände angeglichen haben. Die Pfeile zeigen die Fließrichtung des Elektrolyten.

Dieses Prinzip wird u. a. in den Dokumenten US 4,963,444; US 5,096,787 und US 5,032,476 beschrieben. Die Erfinder der vorliegenden Erfindung haben jedoch ermittelt, daß mit diesen aus dem Stand der Technik bekannten Vorrichtungen noch keine optimale Elektrolytdurchmischung erreichbar ist.

Die Aufgabe der Erfindung besteht in der Schaffung einer Flüssigelektrolytbatterie für Fahrzeuge, wobei die zu erzielende höhere Batterieleistung und Lebensdauer vorwiegend mittels einer verbesserten Elektrolytdurchmischung erreicht werden soll.

Die Aufgabe wird mittels Batterien gemäß Anspruch 1 gelöst.

Der Vorteil der Erfindung gemäß Anspruch 1 besteht darin, daß die Flüssigelektrolyt-Umwälzvorrichtung einen hohen Durchmischungsgrad bewirkt und dadurch die Batterieleistung wesentlich gesteigert und gleichzeitig die Lebensdauer der Batterie verlängert wird. Die Flüssigelektrolyt-Umwälzvorrichtung weist keine frei beweglichen Teile auf, die durch Elektrolytablagerungen in ihrer Bewegung behindert werden könnten. Somit arbeitet diese Vorrichtung sehr zuverlässig. Ferner ist die Flüssigelektrolyt-Umwälzvorrichtung sehr kostengünstig herstellbar und läßt sich gut in die Herstellungstechnologie für diese Batterien integrieren. Im Gegensatz zu den aus dem Stand der Technik bekannten hydrostatischen Elektrolytpumpen pumpt diese Vorrichtung den Elektrolyten von unten nach oben. Die Erfinder haben nachgewiesen, daß auf diesem Weg die Durchmischung wesentlich verbessert werden konnte. Offensichtlich ist es für die Durchmischung vorteilhaft, wenn die dickere Bodensäure nach oben gedrückt wird und über den waagerechten Teil der Durchmischungsvorrichtung abläuft, um sich mit der dünneren Oberflächensäure zu vermischen.

Merkmale der Erfindung und/oder einer weitergebildeten Flüssigelelektrolytbatterie werden nachfolgend erlaütert:

Bei einer Flüssigelektrolytbatterie ist parallel zu den senkrechten Kanten ein zweites plattenförmiges Element angeordnet ist, um einen Strömungskanal auszubilden. Damit können die Strömungsverhältnisse definierter eingestellt und optimiert werden.

Dabei sind das erste plattenförmige Element und das zweite plattenförmige Element einstückig als Winkel ausgebildet, wodurch u. U. eine leichtere Montage erzielbar ist.

Bei einer nach Anspruch 2 weitergebildeten Flüssigelektrolytbatterie sind im Bereich der Oberkante des ersten plattenförmigen Elements eine erste Rücklauf-Verhinderungsvorrichtung zur Verhinderung des Rücklaufs einer ersten Elektrolytwelle vorgesehen ist, was die Durchmischung verbessert.

Bei einer nach Anspruch 3 weitergebildeten Flüssigelektrolytbatterie ist die Rücklauf-Verhinderungsvorrichtung als stegförmiger Materialfortsatz des ersten plattenförmiges Elements ausgebildet ist, was eine besonders kostengünstige Variante darstellt.

Bei einer nach Anspruch 4 weitergebildeten Flüssigelektrolytbatterie ist die Rücklauf-Verhinderungsvorrichtung als Klappenventil ausgebildet, was den Rücklauf besonders gut verhindert.

Bei einer nach Anspruch 5 weitergebildeten Flüssigelektrolytbatterie ist die Flüssigelektrolyt-Umwälzvorrichtung an beiden Gehäuseseiten angeordnet ist, was eine verbesserte Durchmischung bewirkt.

Der Vorteil der Erfindung besteht ferner darin, daß durch die Wärmekonvektion auch dann noch eine Durchmischung erfolgt, wenn die Batterie nur wenig oder nicht bewegt wird, wobei die Heizelemente so angeordnet sind, daß eine kräftige Elektrolytströmung erzeugbar ist.

Vorzugsweise werden Flächenheizelemente verwendet, die auf oder in der Gehäusewandung angeordnet sind. Falls die Batterie aus zwei Zellengruppen aufgebaut ist, die durch eine gemeinsame Trennwand miteinander verbunden sind, kann die Heizung an dieser, in der Batteriemitte liegenden Trennwand, angeordnet sein. Bei dieser Ausführungsform treten nahezu keine Wärmeverluste auf.

Zum Schutz der Elektrodenplatten ist eine Wärmeabschirmung vorgesehen, so daß der von der Heizung erwärmte Elektrolyt nicht unmittelbar an die Elektrodenplatten gelangt. Ein Teil der mechanischen Umwälzvorrichtung wird gleichzeitig als Wärmeabschirmung verwendet, so daß sowohl eine mechanisch bewirkte, als auch eine thermisch bewirkte Umwälzung des Elektrolyten auftritt.

Ein Vorteil der Erfindung besteht darin, daß analog zur Erzeugung einer Konvektion mittels Heizelemente auch dann noch eine Durchmischung erfolgt, wenn die Batterie nur wenig oder nicht bewegt wird. Als Kühlelement ist ein Peltierelement gut geeignet.

Es handelt sich bei der Kühlung um den gleichen Effekt, der jedoch mit einem anderen Mittel erzeugt wird. Daher kann eine Kombination mit der mechanischen Umwälzvorrichtung vorgenommen werden.

Weitere Maßnahmen und Vorteile der Erfindung ergeben sich aus der nachfolgenden Beschreibung der Ausführungsbeispiele in Verbindung mit den beigefügten schematischen Zeichnungen.
- Fig. 1: zeigt einen Seiten-Längsschnitt einer Flüssigelektrolytbatterie nach dem Stand der Technik.
- Fig. 2: zeigt die Draufsicht auf eine offene Flüssigelektrolytbatterie nach dem Stand der Technik.
- Fig. 3: zeigt die Darstellung von Fig. 1, wobei die Flüssigelektrolytbatterie eine Beschleunigung erfährt und der Pegel des Elektrolyten in Schräglage liegt.
- Fig. 4: zeigt eine erste Ausführungsform der Erfindung.
- Fig. 5: zeigt die erste Bewegungsphase der Oberfläche des Elektrolyten bei einer Beschleunigung.
- Fig. 6: zeigt die zweite Bewegungsphase der Oberfläche des Elektrolyten nach der Beschleunigung.
- Fig. 7: zeigt die dritte Bewegungsphase der Oberfläche des Elektrolyten nach der Beschleunigung.
- Fig. 8: zeigt eine zweite Ausführungsform der Erfindung.
- Fig. 9: zeigt die Draufsicht auf eine offene, erfindungsgemäße Flüssigelektrolytbatterie mit einseitiger Umwälzvorrichtung.
- Fig. 10: zeigt die Draufsicht auf eine offene, erfindungsgemäße Flüssigelektrolytbatterie mit doppelseitiger Umwälzvorrichtung.
- Fig. 11: zeigt eine dritte Ausführungsform der Erfindung im Detail.
- Fig. 12: zeigt eine vierte Ausführungsform der Erfindung im Detail.
- Fig. 13: zeigt eine fünfte Ausführungsform der Erfindung.
- Fig. 14: zeigt eine sechste Ausführungsform der Erfindung.
- Fig. 15: zeigt eine weitere Ausführungsform der Erfindung, bei der die Umwälzung durch Erwärmen erfolgt.
- Fig. 16: zeigt eine weitere Ausführungsform der Erfindung, bei der die Umwälzung durch Abkühlen erfolgt.
- Fig. 17: zeigt eine Kombination von mechanischer und thermischer Umwälzung.
- Fig. 18: zeigt eine weitere Kombination von mechanischer und thermischer Umwälzung.
- Fig. 19: zeigt eine Kombination von mechanischer und thermischer Umwälzung durch Kühlung.
- Fig. 20: zeigt eine winkelförmige Mischungsvorrichtung mit Strömungsschlitzen.
- Fig. 21: zeigt eine winkelförmige Mischungsvorrichtung in Verbindung mit speziell ausgebildeten Strömungskanälen.
- Fig. 22: zeigt eine weitere Form einer Mischungsvorrichtung.
- Fig. 23: zeigt eine weitere Form einer Mischungsvorrichtung.
- Fig. 24: zeigt eine weitere Form einer Mischungsvorrichtung.
- Fig. 25: zeigt eine weitere Form einer Mischungsvorrichtung.
- Fig. 26: zeigt eine weitere Form einer Mischungsvorrichtung.
- Fig. 27: zeigt eine weitere Form einer Mischungsvorrichtung.
- Fig. 28: zeigt eine weitere Form einer Mischungsvorrichtung, die sich selbsttätig an unterschiedlichen Säurestand anpaßt.
- Fig. 29: zeigt den nächstliegenden Stand der Technik.

Die Fig. 1 und 2 dienen zur Erläuterung und zeigen eine Flüssigelektrolytbatterie nach dem Stand der Technik mit einem Gehäuse 1 mit Seitenwänden 1a, 1b, 1c, 1d einem Gehäuseboden 1e und einer Abdeckung 1f. In einzelnen Zellen 1g sind Elektroden 2 senkrecht stehend angeordnet. In jeder der Zellen 1g befindet sich ein Flüssigelektrolyt 3, der ca. 1 cm über der Oberkante der Elektroden 2 steht.

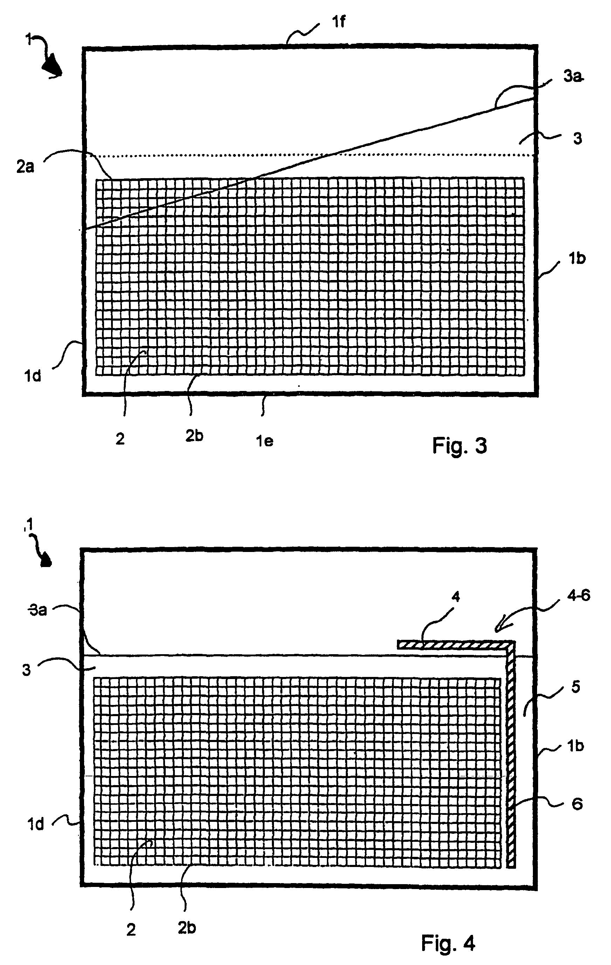

Die Fig. 3 zeigt die Darstellung von Fig. 1, wobei die Flüssigelektrolytbatterie eine Beschleunigung erfährt und der Pegel des Elektrolyten in Schräglage kommt. Dieser Fall tritt ein, wenn die Batterie z. B. in ein PKW so eingebaut ist, daß die Elektrodenplatten sich in Fahrtrichtung erstrekken, die in diesem Beispiel in der Bildebene von links nach rechts verläuft. Wenn das fahrende Fahrzeug abgebremst wird, bewirkt die Massenträgheit des Elektrolyts, daß dieser in Fahrtrichtung schwappt, was durch den schräg liegenden Pegelstand nur schematisch angedeutet ist. Der Elektrolyt bewegt sich während der Fahrt nur geringfügig zwischen den Platten ohne daß eine nennenswerte Durchmischung auftritt.

Die Fig. 4 zeigt eine erste Ausführungsform der Erfindung. Ein Winkel 4-6 ist so eingefügt, daß sein senkrechter Schenkel parallel zu den senkrechten Plattenkanten steht. Sein waagerechter Schenkel liegt parallel zur Oberkante 2a der Platten 2 im Bereich des Pegelstandes 3a des Elektrolyten 3.

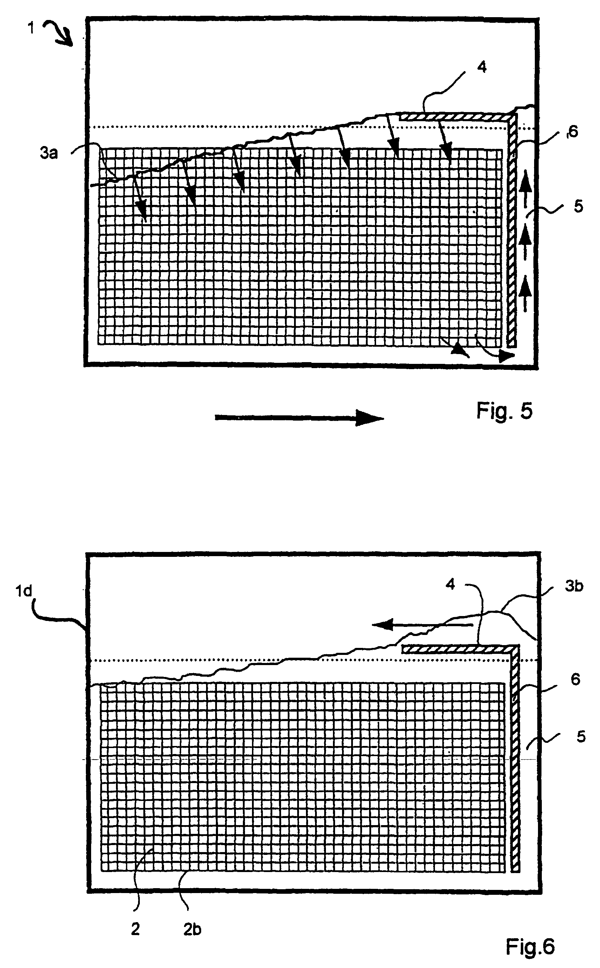

Wenn die vorstehend beschriebene Bremssituation eintritt, verhindert der Winkelabschnitt 4 die beschriebene Schwapp-Bewegung des Elektrolyten 3. In Figur 5 ist schematisch gezeigt, zu welchen Bewegungen der Elektrolyt durch den Winkel 4-6 gezwungen wird. Insbesondere ist zu erwähnen, daß der Elektrolyt in dem senkrechten Strömungskanal 5, der sich zwischen dem senkrechten Schenkel des Winkels und der Zellenwand ausbildet, stark aufwärts gedrückt wird, was durch die aufwärtsgerichteten Pfeile schematisch dargestellt ist.

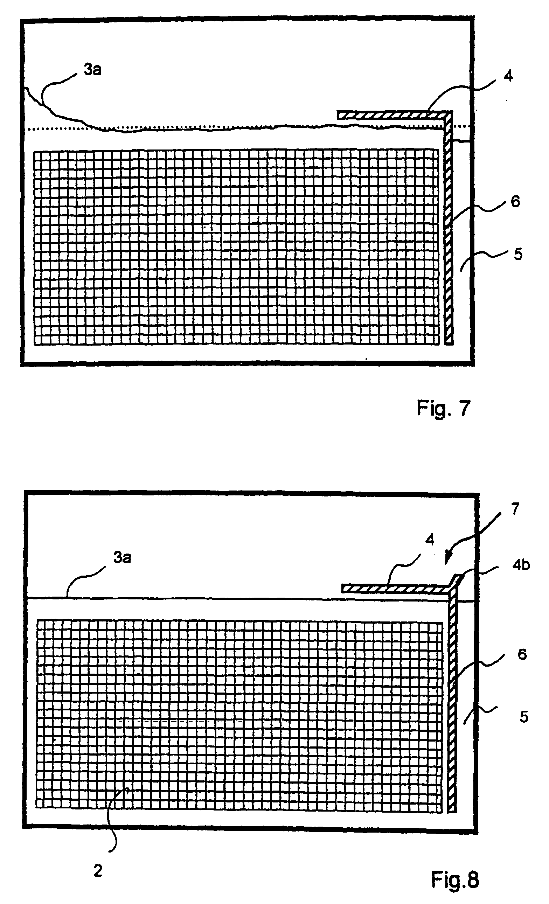

In Fig. 6 ist der nächste Zeitabschnitt dargestellt, in dem sich auf dem waagerechten Winkelschenkel ein Elektrolytberg 3b gebildet hat, der anschließend als Welle in Pfeilrichtung abfließt und an der Wand 1d wieder aufläuft und erneut einen Elektrolytberg (Fig. 7) bilden kann.

Aus vorstehenden Ausführungen ist entnehmbar, daß der Winkel bzw. seine räumliche Anordnung im Batteriegehäuse den Elektrolyten in einen Kreislauf zwingt, wobei die Umwälzung von unten nach oben erfolgt, wodurch eine sehr intensive Durchmischung bewirkt wird. Langzeituntersuchungen haben ergeben, daß die Elektrolytkonzentration in den Bereichen a, b und c nahezu gleich ist und auch das richtige stöchiometrische Verhältnis aufweist. Somit werden auch die Elektrodenabschnitte a und c, die bei den herkömmlichen Batterien nur teilweise genutzt werden konnten, nunmehr vollständig genutzt.

Neben der Erhöhung der Batterie-Leistung weist die Erfindung noch eine Reihe von weiteren Vorteilen auf. Die bessere Durchmischung verhindert, daß sich feste Elektrolytablagerungen bilden können, die bei herkömmlichen Batterien zur Leistungsminderung und zur Verringerung der Lebensdauer führen. Besonders erwähnenswert ist auch die wesentlich verbesserte Kaltstartfähigkeit der erfindungsgemäßen Batterie.

Es ist dem Fachmann klar, daß die erfindungsgemäßen Batterie eine bevorzugte Einbaurichtung hat, die so gewählt wird, daß der Elektrolyt optimal umgewälzt wird. In einem PKW muß die Batterie daher so eingebaut werden, daß die Elektrodenplatten in Fahrtrichtung ausgerichtet sind.

Die Fig. 8 und 10 bis 14 zeigen weitere Ausführungsformen der Erfindung. So zeigt Fig. 8 an dem Winkel 4-6 einen stegförmigen Fortsatz 4b, der senkrecht stehend oder geneigt sein kann. Dieser Fortsatz 4b behindert das schnelle Zurücklaufen des Elektrolyten und verbessert somit seine Durchmischung.

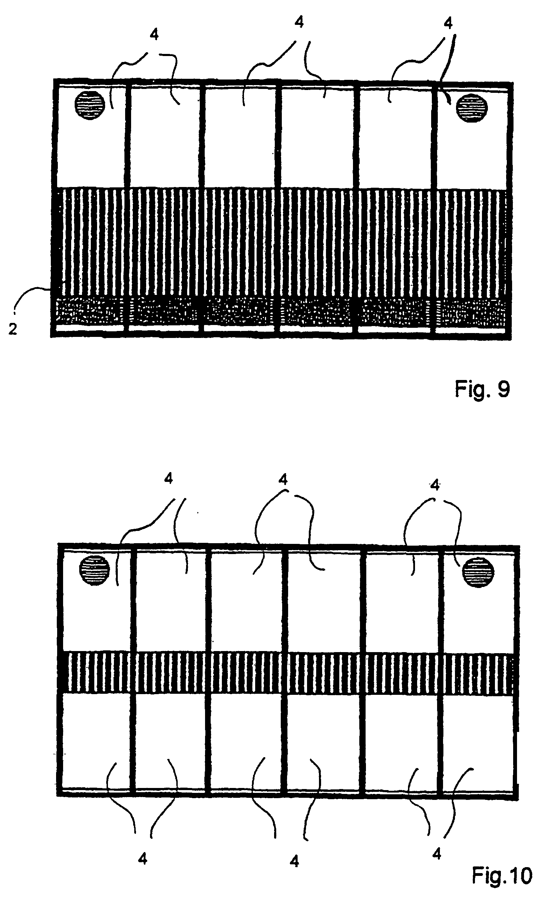

In der Fig. 9 ist eine Draufsicht auf die geöffnete Batterie mit 6 Zellen gezeigt, in denen jeweils ein Winkel 4-6 angeordnet ist.

Da die Batterie insbesonders im PKW durch Bremsen und Gas geben in beiden Richtungen beschleunigt wird, wird die Durchmischung verbessert, wenn zwei Winkel pro Zelle jeweils entgegengesetzt eingebaut sind, wie in Fig. 10 gezeigt und wegen der Gleichartigkeit der Wirkung für den Fachmann keiner weiteren Erläuterung bedarf.

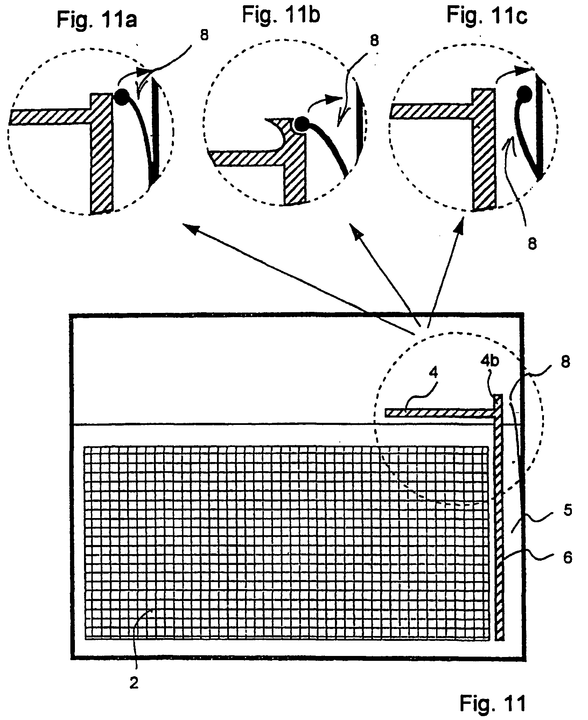

Die Fig. 11 zeigt eine weitere und/oder zusätzliche Möglichkeit, das Zurückfluten des Elektrolyten zu verhindern. An dem Winkel 4-6 kann, wie in der Fig. 11 gezeigt, ein biegeweiche Platte so angeordnet sein, daß sich eine Ventilwirkung ergibt. Wenn der Elektrolyt in dem Strömungskanal aufsteigt, legt sich die biegeweiche Platte an der Wandung an, an der sie befestigt ist, d. h. das Ventil wird geöffnet. Wenn der Elektrolyt zurückfließt, schließt sich das Ventil. Die konstruktiven Details und die Offen- und Schließphase sind in den Fig. 11a bis 11c gezeigt und bedürfen für den Fachmann keine zusätzlichen Erläuterungen.

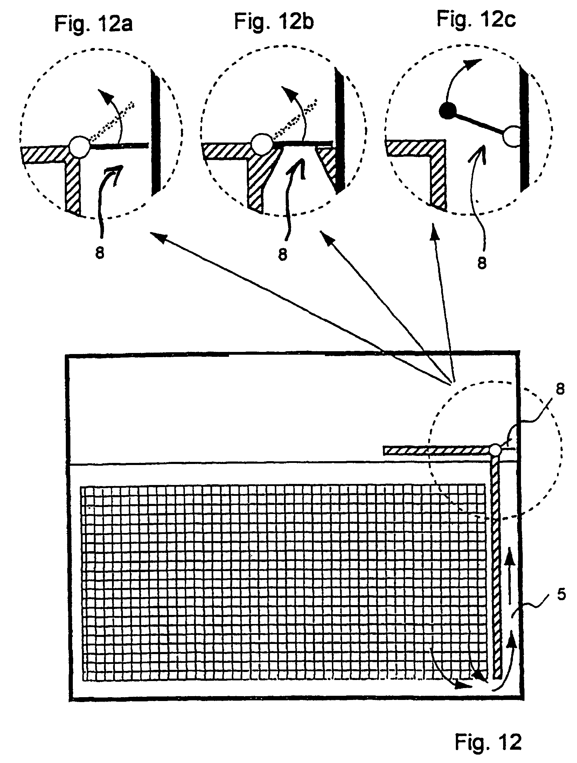

Die Fig. 12 zeigt eine Modifikation des Prinzips nach Fig. 11. Aufbau und Wirkung dieses Klappenventils sind aus den Zeichnungen entnehmbar.

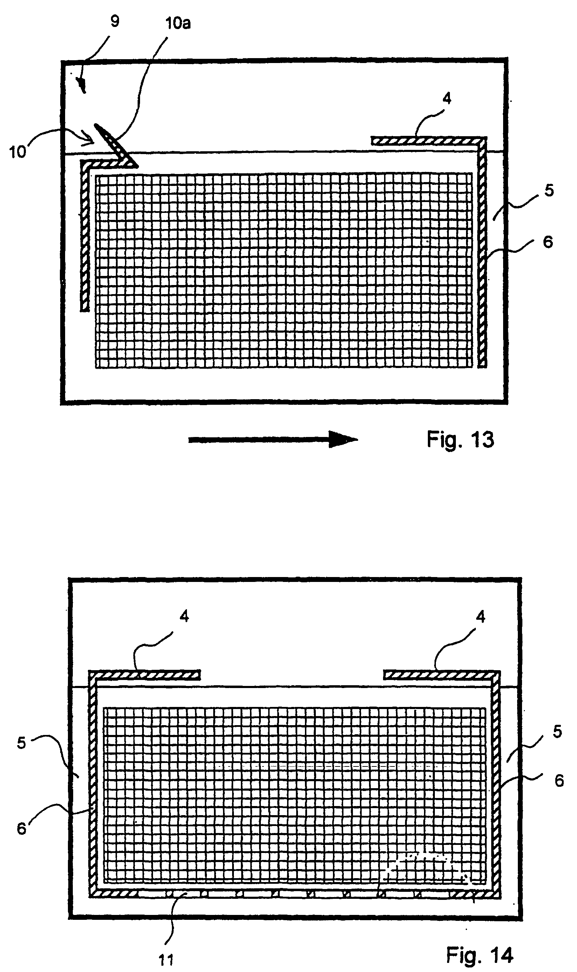

Die Fig. 13 zeigt eine zweite Rücklauf-Verhinderungseinrichtung 9, die bei PKW-Batterien entgegengesetzt zur Fahrtrichtung eingesetzt werden. Diese Vorrichtung weist anstelle des waagerechten Schenkels ein nach hinten offenes Volumen 10 auf. Wenn gemäß Fig. 7 eine rücklaufende Welle entsteht, läuft diese über die Schräge 10a und wird von dem offenen Volumen 10 zurückgehalten, so daß der Elektrolyt entlang des senkrechten Schenkels nach unten sinkt und so ebenfalls eine Durchmischung bewirkt wird.

Es ist zu betonen, daß die aufgezeigten Rücklauf-Verhinderungseinrichtungen weiter modifiziert werden können. So können z. B. an vorbestimmten Stellen in den Winkeln Durchbrüche vorgesehen werden, um z. B. die Ausbildung von toten Bereichen, d. h. dort, wo eine zu geringe Durchmischung stattfindet, zu verhindern. Die Dimensionierung der Rücklauf-Verhinderungseinrichtung für einen bestimmten Batterietyp erfordert bei Kenntnis der technischen Lehre für den Fachmann keine erfinderische Tätigkeit mehr. Ferner wird der Fachmann auch weitere, die Durchmischung befördernde Maßnahmen treffen, die in der vorliegenden Anmeldung nicht explizit erwähnt worden sind. So ist es z. B. von Vorteil, die Strömungswege für den Elektrolyt konstruktiv so zu gestalten, daß innerhalb der durch die Batteriebewegung erzwungenen Strömungen ein geringer Strömungswiderstand auftritt, was u. a. durch möglichst glatte Wandungen und durch die Vermeidung von Vorsprüngen, an denen sich Wirbel bilden können, erreicht wird.

In Fig. 14 ist eine doppelseitige Ausführungsform nach Fig. 10 gezeigt. Hierbei sind die beiden Winkel über eine perforierte Platte 11 miteinander verbunden. Diese Ausführungsform ist montagetechnisch von Vorteil, da die Elektrodenplatten mittels dieser Ausführungsform klammerartig zusammengehalten werden und leicht automatisch montierbar sind. Die Wirkung der Perforation wird unter Hinzuziehung von Fig. 5 dem Fachmann deutlich.

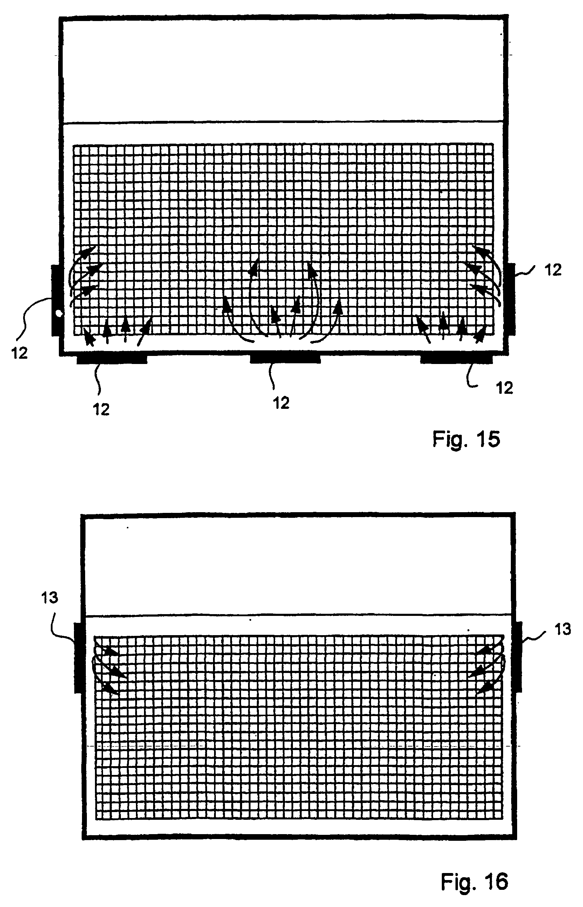

Die Fig. 15 zeigt eine weitere Ausführungsform der Erfindung, bei der die Umwälzung des Elektrolyts mittels Erwärmen erfolgt. Dazu sind im unteren Bereich des Batteriegehäuses elektrische Heizelemente angeordnet. Bei Erwärmung derselben erwärmt sich auch der angrenzende Elektrolyt, der nach oben steigt und dadurch eine Durchmischung bewirkt. Als Heizelemente werden vorzugsweise sehr flach bauende Typen, wie z. B. Folienheizungen verwendet. Diese Heizungselemente kann der Fachmann bei Bedarf aus dem Stand der Technik entnehmen. Auf Grund der einfachen Wirkung sind auch keine weiteren Erläuterungen zur Wirkungsweise notwendig. Es ist zu betonen, daß die Heizanordnungen 12 vorrangig nicht zur Erwärmung des Elektrolyten, sondern zur Erzeugung einer Konvektionsströmung vorgesehen ist, die eine Durchmischung bewirkt. Dementsprechend ist sind die Heizelemente nicht über die gesamte Bodenfläche gleichmäßig verteilt, sondern an vorbestimmten Stellen angeordnet, so daß eine möglichst starke Strömung erzeugt wird.

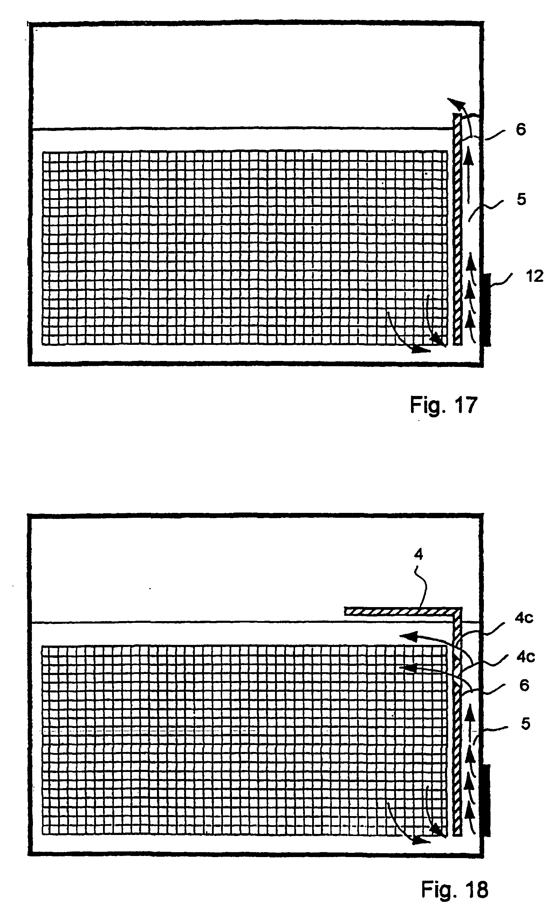

Falls nur ein Heizelement oder Heizelemente mit höherer Leistung zum Einsatz kommen, kann es erforderlich werden, zum Schutz der Elektroden 2 zwischen diese und dem Heizelement einen Wärmeschutz vorzusehen. Dieser Wärmeschutz soll verhindern, daß der stark erhitzte Elektrolyt in Kontakt mit den Elektroden kommt, da diese bei Hitzeeinwirkung beschädigt werden können. In Fig. 17 ist der Wärmeschutz als flache Platte ausgebildet, die so dimensioniert werden kann wie das erste plattenförmige Element 6. Es muß sichergestellt werden, daß der erwärmte Elektrolyt über die obere Kante des Wärmeschutzes ablaufen oder durch eine Öffnung in der Platte austreten kann.

Der besondere Vorteil der Konvektionsmischung durch Wärmeeintrag besteht darin, daß die Batterie nicht bewegt werden muß. Bei niedrigen Außentemperaturen wird gleichzeitig der Elektrolyt erwärmt, was ebenfalls erwünscht ist.

Wenn aus betriebstechnischen Gründen eine Erwärmung der Batterie nicht erwünscht ist, kann gemäß Fig. 16 eine Konvektionsmischung auch durch ein Kühlelement bewirkt werden. Das Kühlelement ist wegen der gegensinnig verlaufenden Konvektion im oberen Randbereich des Batteriegehäuses, d. h. vorzugsweise unterhalb des Elektrolytpegels anzuordnen.

Die Fig. 18 zeigt eine Kombination von mechanischer und thermischer Umwälzung durch Erwärmung. Hierbei wirkt der senkrechte Schenkel des Winkels zur mechanischen Durchmischung gleichzeitig als Thermoschutz bei der thermischen Durchmischung. Um den Abfluß des erwärmten, aufwärtsströmenden Elektrolyts zu ermöglichen, weist der senkrechte Schenkel Löcher 4c auf.

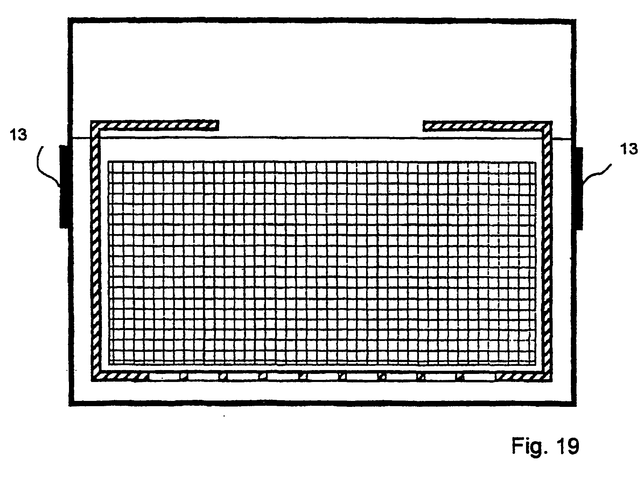

Analog zu der Ausführungsform nach Fig. 18 zeigt Fig. 19 eine Kombination von mechanischer und thermischer Umwälzung durch Kühlung, deren Aufbau vollständig aus der Zeichnung entnehmbar ist. Zur Kühlung werden Peltierelemente eingesetzt. Die Funktion der Anordnung ergibt sich aus den bereits erläuterten Zusammenhängen und der Zeichnung.

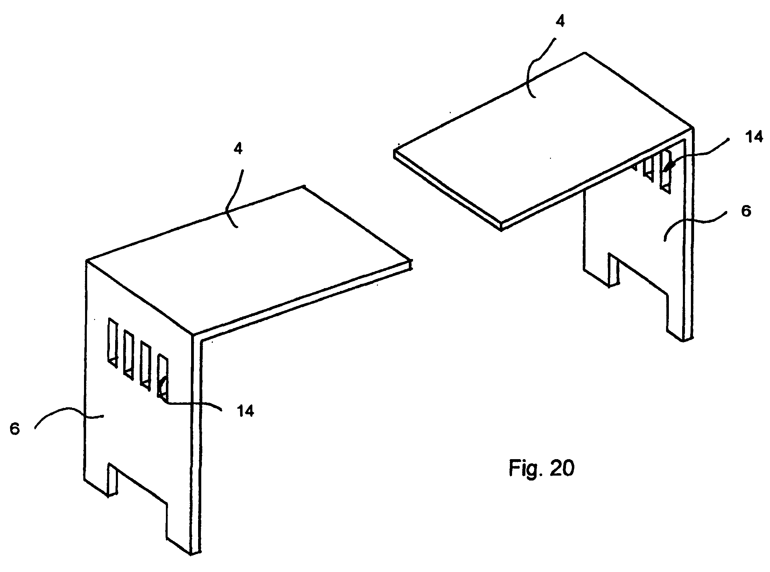

In Fig. 20 sind Durchmischungswinkel gezeigt, die Strömungsschlitze 14 aufweisen. Diese Schlitze 14 verbessern die Strömungsverhältnisse bei unterschiedlichen Elektrolytständen.

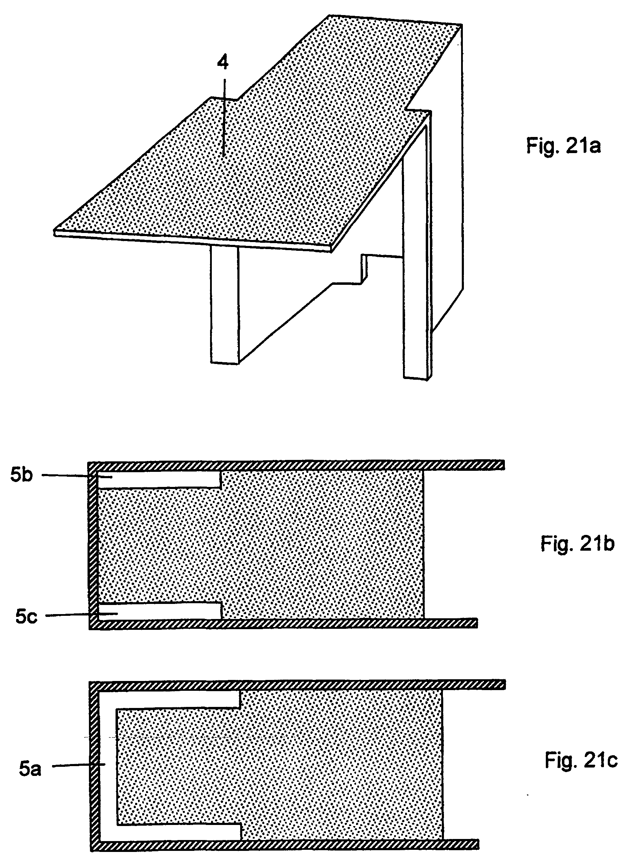

In Fig. 21 ist ein Durchmischungswinkel gezeigt, der zur Ausbildung unterschiedlicher Strömungskanäle 5a geeignet ist, wobei Fig. 21a eine perspektivische Abbildung des Durchmischungswinkels zeigt, und die Fig. 21b und 21c den eingebauten Winkel in der Draufsicht zeigen. Bei der Anordnung nach Fig. 21c entsteht ein U-förmiger Strömungskanalquerschnitt und bei der Anordnung nach Fig. 21b entstehen zwei, sich gegenüberliegende Strömungskanäle.

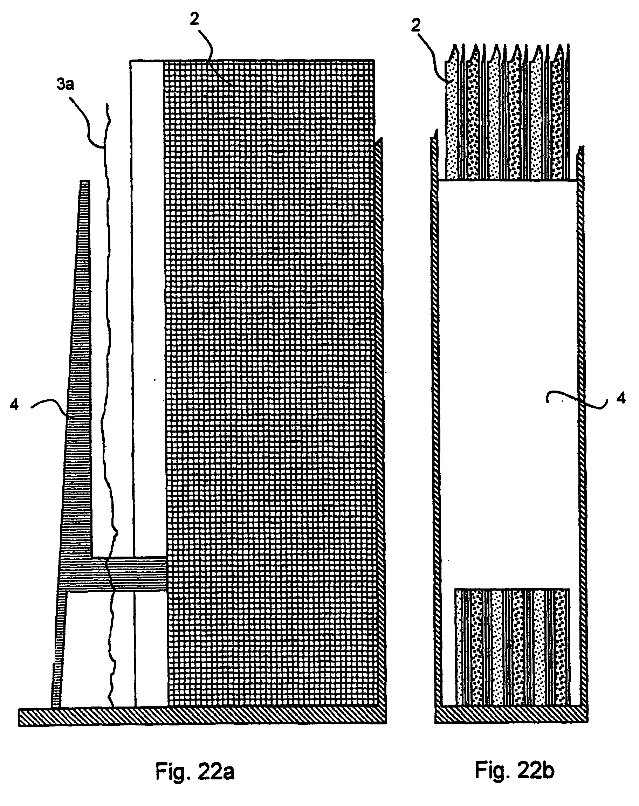

In Fig. 22 ist eine Durchmischungsplatte 4 gezeigt, wobei Fig. 22a einen Seitenquerschnitt einer Batterie zeigt. Die Platte 4 ist auf dem Plattenpaket installiert und so wie alle oberen Winkelabschnitte 4 zur Batteriemitte hin vorzugsweise leicht geneigt. In diesem Ausführungsbeispiel übernimmt die Batteriewandung die Funktion des Winkelschenkels 6.

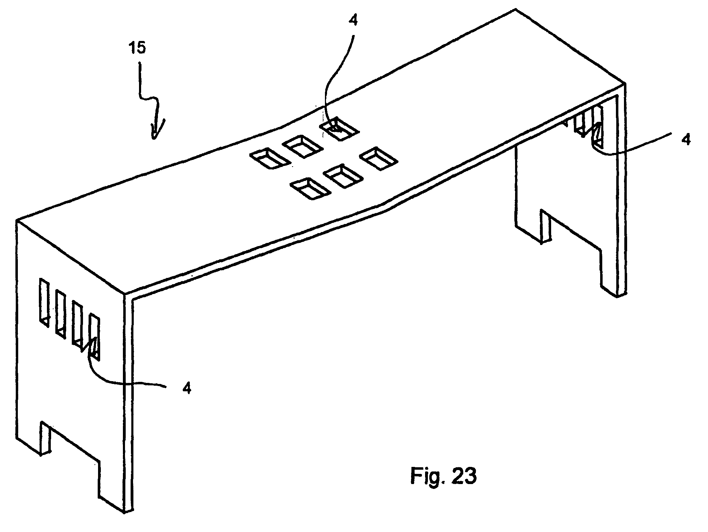

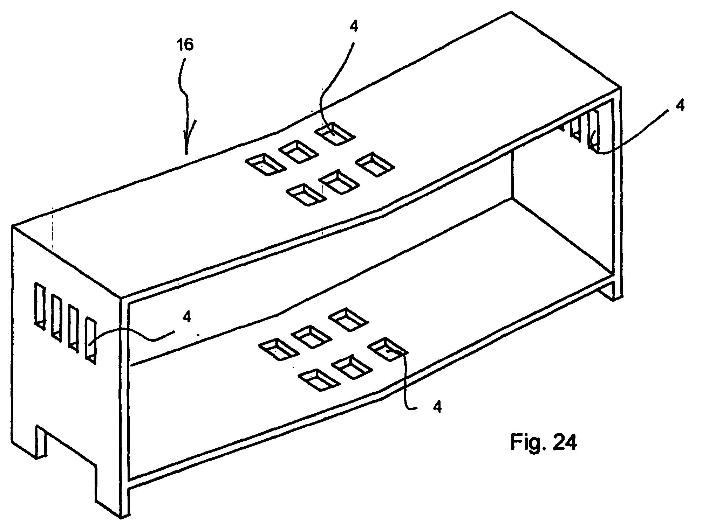

In Fig. 23 und 24 sind Durchmischungsvorrichtungen gezeigt, bei der beide Winkel zu einer U- bzw. kastenförmigen Einheit 15, 16 miteinander verbunden sind. Die Schlitze 4 dienen dem Zu-und Abfluß des Elektrolyten.

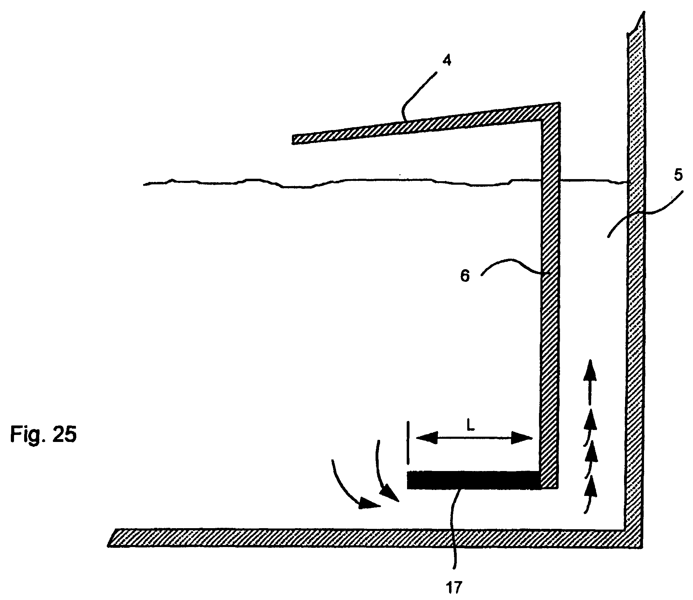

In Fig. 25 ist ein Durchmischungswinkel gezeigt, der an dem unteren Abschnitt des senkrechten Winkelschenkels 6 einen waagerechten, zur Batteriemitte gerichteten Schenkel 17 mit einer Länge L aufweist. Mit dieser konstruktiven Maßnahme ist es möglich, die Strömungsbedingungen beim Einleiten des Elektrolyten in den Strömungskanal 5 zu optimieren. Der Schenkel 17 kann auch Löcher oder Schlitze aufweisen, wenn dadurch die Strömungsbedingungen verbessert werden.

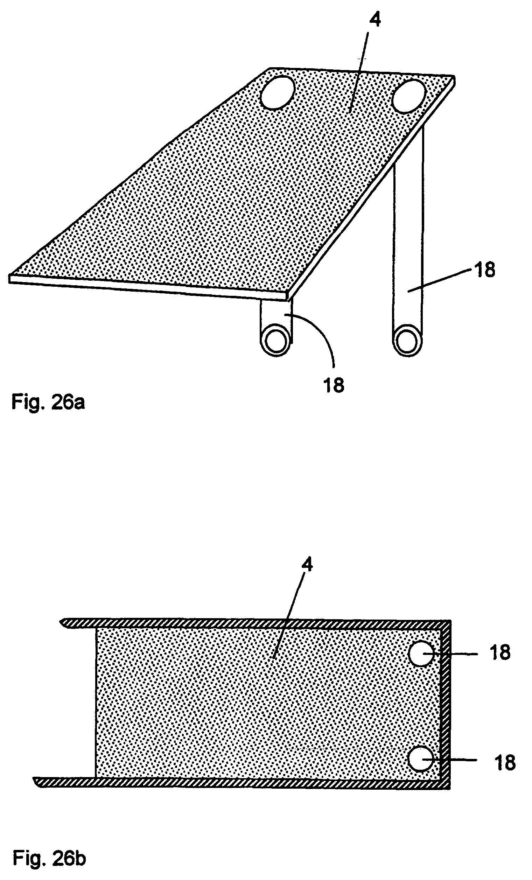

In Fig. 26 ist ein Durchmischungswinkel gezeigt, dessen Strömungskanal aus zwei Röhren 18 bestehen.

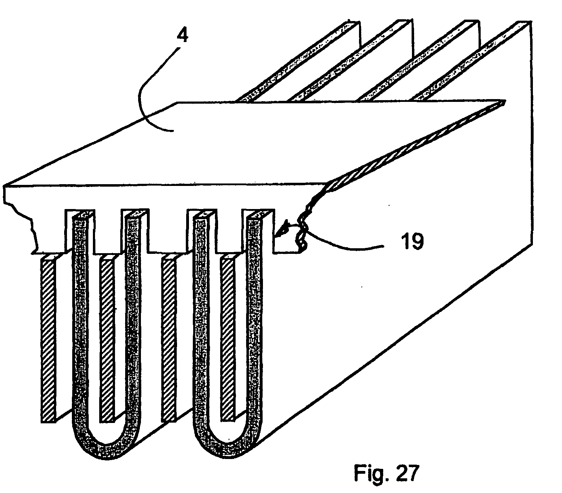

In Fig. 27 ist ein Durchmischungswinkel ähnlich wie in Fig. 22 gezeigt. Dieser Winkel weist Ausbildungen 19 auf, die eine Verankerung des Winkels in dem Plattenpaket ermöglicht und gleichzeitig das Pattenpaket mechanisch stabilisiert. Es handelt sich hierbei lediglich um eine konstruktive Besonderheit.

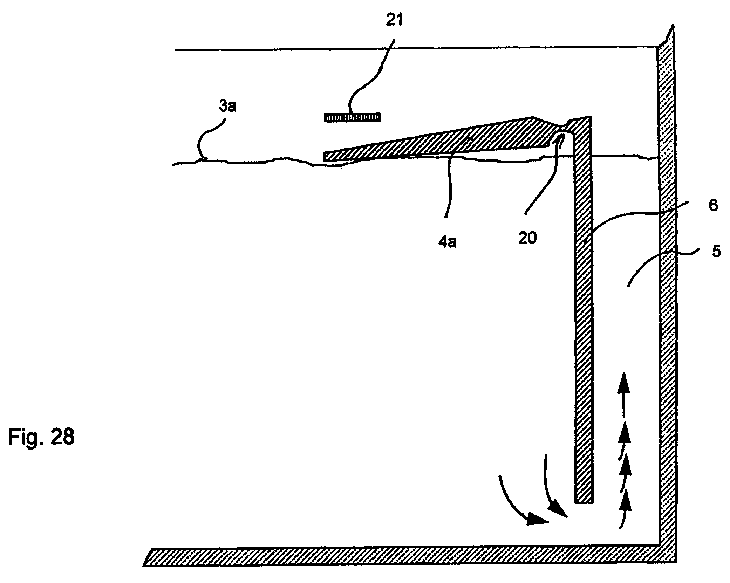

In Fig. 28 ist ein Durchmischungswinkel mit einem beweglichen Schenkel 4a gezeigt, der über ein Foliengelenk 20 mit dem senkrechten Schenkel 6 schwenkbar verbunden ist. Dieser bewegliche Schenkel 4a schwimmt auf der Elektrolytoberfläche 3a. Diese Anordnung verbessert bei geeigneter Dimensionierung den Abfluß des durch den Strömungskanal 6 aufwärts strömenden Elektrolyt, wodurch die Durchmischung verbessert wird.

Der Fachmann wird unter Berücksichtigung konstruktiver und technologischer Randbedingungen eine der aufgezeigten Varianten auswählen und ggf. modifizieren, ohne dabei erfinderisch tätig zu werden.

An Hand der beschriebenen Ausführungsformen kann der Fachmann die technische Lehre der vorliegenden Erfindung vollständig entnehmen. Es ist klar, daß diese Ausführungsformen durch einen Fachmann mit Hilfe der erfindungsgemäßen Lehre weiterentwickelt und modifiziert oder kombiniert werden können. Daher fallen auch diese, nicht explizit genannten oder gezeigten weiteren Ausführungsformen in den Schutzbereich der nachfolgenden Patentansprüche.

## Patentansprüche

1. Flüssigelektrolytbatterie, die aufweist:
- ein Gehäuse **(1)** mit Seitenwänden **(1a, 1b, 1c, 1d),** einem Gehäuseboden **(1e)** und einer Abdeckung,
- plattenförmige Elektroden **(2),** die paarweise in Zellen senkrecht stehend angeordnet sind,
- ein Flüssigelektrolyt **(3),** dessen Pegelstand **(3a)** in den Zellen bis über die Oberkante **(2a)** der Elektroden **(2)** reicht und
- eine Flüssigelektrolyt-Umwälzvorrichtung, **dadurch gekennzeichnet, daß** die Flüssigelektrolyt-Umwälzvorrichtung folgende Merkmale aufweist:
- ein erstes plattenförmiges Element **(4),** das parallel zu den Elektrodenplatten-Oberkanten oder leicht nach innen geneigt im Bereich des Pegelstandes **(3a)** angeordnet ist,
- ein zweites plattenförmiges Element **(6),** das parallel zu den senkrechten Kanten **(2c)** angeordnet ist, um einen Strömungskanal **(5)** auszubilden, wobei das erste plattenförmige Element **(4)** und das .zweite plattenförmige Element **(6)** einstückig als Winkel **(4-6)** ausgebildet sind und
- ein Heizelement **(12),** welches am Gehäuseboden **(1e)** oder in naher Lagebeziehung zu diesem an den Seitenwänden **(1a, 1c)** angeordnet und so ausgebildet ist, um bei Erwärmung eine kräftige Elektrolytströmung zu erzeugen.

2. Flüssigelektrolytbatterie nach Anspruch 1, **dadurch gekennzeichnet, daß** im Bereich der Oberkante **(4a)** des ersten plattenförmigen Elements **(4)** eine erste Rücklauf-Verhinderungsvorrichtung **(7)** zur Verhinderung des Rücklaufs einer ersten Elektrolytwelle vorgesehen ist.

3. Flüsslgelektrolytbatterie nach Anspruch 2, **dadurch gekennzeichnet, daß** die Rücklauf-Verhinderurigsvorrichtung **(7)** als stegförmiger Materialfortsatz **(4b)** des ersten plattenförmiges Elements **(4)** ausgebildet ist.

4. Flüssigelektrolytbatterie nach Anspruch 2, **dadurch gekennzeichnet, daß** die erste Rücklauf-Verhinderungsvorrichtung **(7)** als Klappenventil **(8)** ausgebildet ist.

5. Flüssigelektrolytbatterie nach einem der vorhergehenden Ansprüche, **dadurch gekennzeichnet, daß** die Flüssigelektrolyt-Umwälzvorrichtung an beiden Gehäuseselten **(1b, 1d)** angeordnet ist.

6. Flüssigelektrolytbatterie nach Anspruch 5, **dadurch gekennzeichnet, daß** die gegenüberliegenden Flüssigelektrolyt-Umwälzvorrichtungen miteinander verbunden sind.

## Claims

1. A liquid electrolyte battery comprising:
- a housing (1) with side walls (1a, 1b, 1c, 1d), a housing base (1e) and a cover,
- plate-shaped electrodes (2), disposed vertically upright in pairs in cells,
- a liquid electrolyte (3), the level (3a) of which in the cells extends to above the top edge (2a) of the electrodes (2) and
- a liquid electrolyte circulating device,
**characterised in that** the liquid electrolyte circulating device has the following features:
- a first plate-shaped element (4), which is disposed parallel to the electrode plate top edges or inclined slightly inwards in the region of the level (3a),
- a second plate-shaped element (6), which is disposed parallel to the vertical edges (2c) to form a flow duct (5), the first plate-shaped element (4) and the second plate-shaped element (6) being constructed in one piece as a bracket (4 - 6) and
- a heater element (12), which is disposed on the housing base (1e) or in close positional relationship thereto at the side walls (la, lc) and is so constructed as to produce a vigorous electrolyte flow on heating.

2. A liquid electrolyte battery according to claim 1, **characterised in that** a first reflux prevention device (7) for preventing reflux of a first electrolyte wave is provided in the region of the top edge (4a) of the first plate-shaped element (4).

3. A liquid electrolyte battery according to claim 2, **characterised in that** the reflux prevention device (7) is constructed as a continuation (4b) in the form of a web of the material of the first plate-shaped element (4).

4. A liquid electrolyte battery according to claim 2, **characterised in that** the first reflux prevention device (7) is constructed as a check valve (8).

5. A liquid electrolyte battery according to any one of the preceding claims, **characterised in that** the liquid electrolyte circulating device is disposed on both sides (1b, 1d) of the housing.

6. A liquid electrolyte battery according to claim 5, **characterised in that** the oppositely situated liquid electrolyte circulating devices are interconnected.

## Revendications

1. Batterie à électrolyte liquide, qui comprend
- une enceinte (1) ayant des parois latérales (la, 1b, 1c, 1d), un fond (le) et un couvercle,
- des électrodes en forme de plaque (2), qui sont disposées verticalement par paires en cellules,
- un électrolyte liquide (3), dont le niveau (3a) dans les cellules arrive jusqu'au-dessus du bord supérieur des électrodes (2), et
- un dispositif de mise en circulation de l'électrolyte liquide, **caractérisé en ce que** le dispositif de mise en circulation de l'électrolyte liquide présente les caractéristiques suivantes :
- un premier élément en forme de plaque (4), qui est disposé parallèlement aux bords supérieurs des plaques d'électrodes, ou légèrement incliné vers l'intérieur dans le domaine du niveau (3a),
- un deuxième élément en forme de plaque (6) qui est disposé parallèlement aux bords verticaux (2c), pour former un canal d'écoulement (5), le premier élément en forme de plaque (4) et le deuxième élément en forme de plaque (6) étant configurés en une seule pièce formant un coin (4-6), et
- un élément chauffant (12), qui est disposé sur le fond (1e) ou à proximité de celui-ci sur les parois latérales (1a, 1c), et qui est configuré de manière à produire un fort écoulement d'électrolyte lors d'un chauffage.

2. Batterie à électrolyte liquide selon la revendication 1, **caractérisée en ce que** dans le domaine du bord supérieure (4a) du premier élément en forme de plaque (4) un premier dispositif anti-retour (7) est prévu pour empêcher le retour d'une première vague d'électrolyte.

3. Batterie à électrolyte liquide selon la revendication 2, **caractérisée en ce que** le dispositif anti-retour (7) est configuré sous forme d'un prolongement de matière en forme de tige du premier élément en forme de plaque (4).

4. Batterie à électrolyte liquide selon la revendication 2, **caractérisée en ce que** le premier dispositif anti-retour (7) est une soupape à clapet (8).

5. Batterie à électrolyte liquide selon l'une des revendications précédentes, **caractérisée en ce que** le dispositif de mise en circulation de l'électrolyte liquide est disposé sur deux parois (1b, 1d) de l'enceinte.

6. Batterie à électrolyte liquide selon la revendication 5, **caractérisée en ce que** les dispositifs de mise en circulation de l'électrolyte liquide qui se font face sont reliés entre eux.
